(19) Europäisches Patentamt / European Patent Office / Office européen des brevets

(11) **EP 2 595 395 A1**

(12) **EUROPEAN PATENT APPLICATION**

(43) Date of publication:
**22.05.2013 Bulletin 2013/21**

(51) Int Cl.:
***H04N 13/04*** (2006.01)

(21) Application number: **12189217.8**

(22) Date of filing: **19.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.11.2011 KR 20110121912**

(71) Applicant: **Samsung Electronics Co., Ltd Gyeonggi-do 443-742 (KR)**

(72) Inventors:
• **Hwang, Min-cheol**
  **Seoul (KR)**
• **Kim, Hyung-rae**
  **Seoul (KR)**

• **Min, Kwan-sik**
  **Gyeonggi-do (KR)**
• **Park, Jae-sung**
  **Gyeonggi-do (KR)**
• **Sung, Jun-ho**
  **Seoul (KR)**
• **Yun, Sang-un**
  **Seoul (KR)**
• **Cho, Bong-hwan**
  **Gyeonggi-do (KR)**

(74) Representative: **Taor, Simon Edward William et al
Venner Shipley LLP
200 Aldersgate
London EC1A 4HD (GB)**

(54) **Display apparatus and driving method thereof**

(57)    A display apparatus is provided. The display apparatus includes an image input unit which receives a $_3$D image, an image processing unit which divides the $_3$D image into a left-eye image and a right-eye image, an image output unit which includes a polarization panel that is switchable between polarization directions, and which provides a different polarization direction to the left-eye image and the right-eye image displayed alternately by switching a polarization direction of the polarization panel, a voltage driving unit which applies a driving voltage to the polarization panel, and a controller which divides the polarization panel in time or in space and drives the polarization panel with a voltage corresponding to each of Red, Green, and Blue (RGB) pixels, respectively, which form at least one of the left-eye image and the right-eye image.

FIG. 1B

Printed by Jouve, 75001 PARIS (FR)

**Description**

Methods and apparatuses consistent with exemplary embodiments relate to a display apparatus and a driving method thereof, and more particularly, to a display apparatus which displays a three-dimensional (3D) image and a driving method thereof.

3D stereoscopy is applied to diverse fields such as information communication, broadcasting, medical service, education and training, military, games, animation, virtual reality, computer aided design (CAD), and industrial technologies. 3D stereoscopy is the core base technology of next generation 3D stereoscopic multimedia information communication, which is commonly utilized in the aforementioned diverse fields.

The stereoscopic sense that a person generally perceives is generated by the complex action of diverse factors, such as a degree of change in thickness of the lenses of the eyes according to the location of an object being observed, an angle difference between the eyes and the object, a difference in location and shape of the object as observed from the right and left eyes, a time difference due to a movement of the object, and other diverse psychological and memory effects.

Among these, binocular disparity, which appears due to the horizontal separation of about 6-7 cm between the two eyes of a person, is the most important factor in the perception of a stereoscopic image. That is, a person observes an object with an angle difference due to the binocular disparity, and thus respective images entering the two eyes are different. If these two images are transmitted to the brain through the retinas, the brain accurately combines two pieces of information and thus the viewer perceives a 3D stereoscopic image.

3D image display apparatuses are divided into glasses types, which use special glasses, and non-glasses types, which operate without using special glasses. A glasses type apparatus employs a color filter scheme, a polarization filter, or a shutter glasses scheme, thereby allowing a viewer to perceive a stereoscopic image. A color filter scheme separates and selects an image using complementary color filters. A polarization filter scheme separates a left-eye image and a right-eye image using a light shielding effect obtained by a combination of orthogonal polarization elements. A shutter glasses scheme alternately shades the left-eye and the right-eye in response to a synchronization signal which projects a left-eye image signal and a right-eye image signal onto a screen.

Among these, the polarization filter scheme uses passive type polarized glasses which have different left and right polarizations.

An active retarder, which is a time division scheme among the polarization filter schemes, has an advantage of being able to retain resolution and brightness and separate a left-eye image and a right-eye image. However, a related-art method to drive such an active retarder to correspond to a wavelength of a specific color has a problem in that it may not represent a hue or brightness of other colors.

One or more exemplary embodiments may overcome the above disadvantages and other disadvantages not described above. However, it is understood that one or more exemplary embodiments are not required to overcome the disadvantages described above, and may not overcome any of the problems described above.

One or more exemplary embodiments include a display apparatus which adjusts a driving voltage of a polarization panel which is switchable between polarization directions, and displays a 3D image, and a driving method thereof.

According to an aspect of an exemplary embodiment, a display apparatus includes: an image input unit which receives a 3D image, an image processing unit which divides the 3D image into a left-eye image and a right-eye image and processes the left-eye image and the right-eye image, an image output unit which includes a polarization panel which is switchable between polarization directions, and which provides a different polarization direction to the left-eye image and the right-eye image displayed alternately by switching a polarization direction of the polarization panel, a voltage driving unit which applies a driving voltage to the polarization panel, and a controller which divides the polarization panel in time or in space and drives the polarization panel with a voltage corresponding to each of Red, Green, and Blue (RGB) pixels, respectively, and which form at least one of the left-eye image and the right-eye image.

The image output unit may include: a display unit which divides the left-eye image and the right-eye image in time and displays the left-eye image and the right-eye image alternately, and which includes a plurality of RGB pixels, a polarization panel unit which corresponds to an entire area of the display unit and includes the polarization panel which is adjustable in a polarization direction, and a switching unit which switches a polarization direction of the polarization panel such that a first polarization direction is provided if the left-eye image is displayed and a second polarization direction perpendicular to the first polarization direction is provided if the right-eye image is displayed.

The display unit may be configured such that the RGB pixels are arranged repeatedly in vertical lines of same colored pixels, and the controller may divide the polarization panel unit vertically in space in a unit of the same colored pixels and may control the voltage driving unit to drive the polarization panel unit with the voltage corresponding to each of the RGB pixels, respectively.

The controller may control the voltage driving unit to drive the polarization panel unit in sequence with the voltage corresponding to each of the RGB pixels, respectively in an image frame section of at least one of the left-eye image and the right-eye image.

The RGB pixels may each include an emissive element, and the controller may control the display unit such that the RGB pixels emit light simultaneously.

The controller may control the display unit such that the RGB pixels emit light in sequence, and may control the voltage driving unit to drive the polarization panel unit in sequence with the voltage corresponding to each of the RGB pixels, respectively at a time when each of the RGB pixels emits light.

The display apparatus may further include a backlight unit which is disposed on a rear surface of the display unit and emits light to the display unit by driving a white light source, and the controller may control the voltage driving unit to drive the polarization panel unit in sequence with the voltage corresponding to each of the RGB pixels, respectively.

The display apparatus may further include a backlight unit which is disposed on a rear surface of the display unit and emits light to the display unit by driving color RGB light sources in sequence, and the controller may control the voltage driving unit to drive the polarization panel unit in sequence with the voltage corresponding to each of the RGB pixels, respectively, at a time when each of the RGB light source is driven.

The polarization panel unit and the switching unit may be realized by an active retarder.

According to an aspect of another exemplary embodiment, a display apparatus includes: an image input unit which receives a 3D image, an image processing unit which divides the 3D image into a left-eye image and a right-eye image and processes the left-eye image and the right-eye image, an image output unit which includes a polarization panel which is switchable between polarization directions, and which provides a different polarization direction to the left-eye image and the right-eye image displayed alternately by switching a polarization direction of the polarization panel, a voltage driving unit which applies a driving voltage to the polarization panel, and a controller which controls the voltage driving unit to apply a driving voltage corresponding to image information of one from among the left-eye image and the right-eye image to the polarization panel.

Image information may be one among brightness information and grayscale information of the 3D image.

According to an aspect of another exemplary embodiment, a driving method of a display apparatus includes: receiving a 3D image, dividing the 3D image into a left-eye image and a right-eye image and processing the left-eye image and the right-eye image, providing a different polarization direction to the left-eye image and the right-eye image displayed alternately by switching a polarization direction of a polarization panel which is switchable between polarization directions, and dividing the polarization panel in time or in space and driving the polarization panel with a voltage corresponding to each of RGB pixels, respectively, and which form at least one of the left-eye image and the right-eye image.

The display apparatus may include a display unit which divides the left-eye image and the right-eye image in time and displays the left-eye image and the right-eye image alternately, and which includes a plurality of RGB pixels, a polarization panel unit which corresponds to an entire area of the display unit and includes a polarization panel which is adjustable in a polarization direction, and a switching unit which switches a polarization direction of the polarization panel unit such that a first polarization direction is provided if the left-eye image is displayed and a second polarization direction perpendicular to the first polarization direction is provided if the right-eye image is displayed.

The display unit may be configured such that RGB pixels are arranged repeatedly in vertical lines of same colored pixels, and the dividing and driving may include dividing the polarization panel unit vertically in space in a unit of the same colored pixels and driving the polarization panel unit with the voltage corresponding to each of the RGB pixels, respectively.

The dividing and driving may include driving the polarization panel unit in sequence with the voltage corresponding to each of the RGB pixels, respectively, in an image frame section of at least one of the left-eye image and the right-eye image.

The RGB pixels may include an emissive element and may emit light simultaneously.

The RGB pixels may include an emissive element and may emit light in sequence, and the dividing and driving may include driving the polarization panel unit in sequence with the voltage corresponding to each of the RGB pixels, respectively, at a time when each of the RGB pixels emits light.

The display apparatus may further include a backlight unit which is disposed on a rear surface of the display unit and emits light to the display unit by driving a white light source, and the dividing and driving may include driving the polarization panel unit in sequence with the voltage corresponding to each of the RGB pixels, respectively.

The display apparatus may further include a backlight unit which is disposed on a rear surface of the display unit and emits light to the display unit by driving color RGB light sources in sequence, and the dividing and driving may include driving the polarization panel unit in sequence with the voltage corresponding to each of the RGB pixels, respectively, at a time when each of the RGB light sources is driven.

The polarization panel unit and the switching unit may be realized by an active retarder.

According to an aspect of another exemplary embodiment a driving method of a display apparatus includes: receiving a 3D image, dividing the 3D image into a left-eye image and a right-eye image and processing the left-eye image and the right-eye image, providing a different polarization direction to the left-eye image and the right-eye image displayed alternately by switching a polarization direction of a polarization panel which is switchable between polarization directions, and applying a driving voltage corresponding to image information of at least one of the left-eye image and the right-eye image to the polarization panel.

Image information may be one from among brightness information and grayscale information of the 3D image.

BRIEF DESCRIPTION OF THE DRAWING FIGURES

The above and/or other aspects will be more apparent by describing in detail exemplary embodiments, with reference to the accompanying drawings, in which:

FIG. 1A is a view illustrating a 3D image providing system according to an exemplary embodiment;
FIG. 1B is a view to explain an operation of a 3D image providing system according to an exemplary embodiment;
FIG. 2A is a block diagram illustrating a display apparatus according to an exemplary embodiment;
FIGS. 2B and 2C are block diagrams illustrating an image output unit in detail according to various exemplary embodiments;
FIGS. 3 to 6 are views to explain a driving method of a display apparatus in detail according to various exemplary embodiments;
FIGS. 7A and 7B are views to explain an effect which is obtained if a principle of the present disclosure is applied; and
FIG. 8 is a flowchart illustrating a driving method of a display apparatus according to an exemplary embodiment.

Hereinafter, exemplary embodiments will be described in greater detail with reference to the accompanying drawings.

In the following description, same reference numerals are used for the same elements when they are depicted in different drawings. The matters described in the description, such as detailed construction and elements, are provided to assist in a comprehensive understanding of exemplary embodiments. Thus, it is apparent that exemplary embodiments can be carried out without those specifically described matters. Also, functions or elements known in the related art are not described in detail since they would obscure the exemplary embodiments with unnecessary detail.

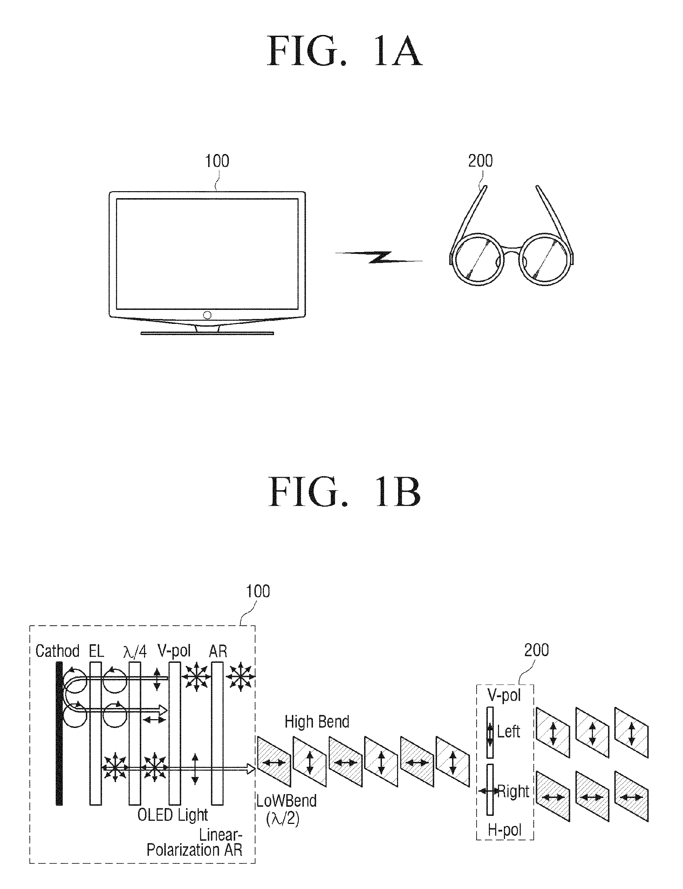

FIG. 1A is a view illustrating a 3D image providing system according to an exemplary embodiment. As shown in FIG. 1A, the 3D image providing system includes a display apparatus 100 that displays a 3D image on a screen and 3D glasses 200 that allow a user to view the 3D image.

The display apparatus 100 receives a 3D image from a photographing apparatus such as a camera or receives a 3D image that is transmitted from a broadcasting station after having been photographed by a camera and edited/processed by the broadcasting station, processes the 3D image and then displays the 3D image on the screen. In particular, the display apparatus 100 processes a left-eye image and a right-eye image with reference to a format of the 3D image, and time-divides the left-eye image and the right-eye image, thereby displaying the left-eye image and the right-eye image alternately.

The 3D glasses 200 may be realized by passive polarized glasses having different polarizations for the left eye and the right eye. The passive polarized glasses have the advantages of being lighter and cheaper than active glasses types, such as shutter glasses.

The 3D image providing system according to the exemplary embodiment may further include a camera (not shown) to generate a 3D image.

The camera (not shown) is a kind of a photographing apparatus used to generate a 3D image. The camera generates a left-eye image which is photographed to be provided to the left eye of a user and a right-eye image which is photographed to be provided to the right eye. The 3D image includes the left-eye image and the right-eye image, and the left-eye image and the right-eye image are alternately provided to the left eye and the right eye of the user, so that the stereoscopic sense can be perceived due to binocular disparity.

To achieve this, the camera (not shown) includes a left-eye camera to generate the left-eye image and a right-eye camera to generate the right-eye image, and a distance between the left-eye camera and the right-eye camera is determined based on a distance between the two eyes of a person.

The camera (not shown) transmits the left-eye image and the right-eye image to the 3D display apparatus 100. In particular, the left-eye image and the right-eye image may be transmitted from the camera (not shown) to the 3D display apparatus 100 in a format that includes the left-eye image or the right-eye image in one frame, or another format that includes both the left-eye image and the right-eye image in one frame.

The camera (not shown) may determine one of various formats of the 3D image in advance, and may generate the 3D image according to the determined format. The 3D image is transmitted to the 3D display apparatus 100.

FIG. 1B is a view to explain an operation of a 3D image providing system according to an exemplary embodiment.

As shown in FIG. 1B, a 3D image providing system according to an exemplary embodiment may employ an active shutter scheme which combines a passive glasses scheme and an active glasses scheme. The active shutter scheme adds an active retarder to a display panel removing the need for the liquid crystal shutters of active glasses, thereby outputting a left-eye image and right-eye image in different polarization states. Accordingly, the active shutter scheme displays the left-eye image and the right-eye image by time-dividing them, while making output polarization of each image in a different state, so that a 3D image of high quality can be viewed without loss of resolution, even though passive glasses are used.

Although FIG. 1B illustrates a linear-polarization active retarder being applied, the present disclosure may be applied to an active retarder of a circular polarization type or an elliptical polarization type.

Also, although FIG. 1B illustrates an organic light emitting diode (OLED) display, which is an emissive display, for example, the present disclosure may be applied to a liquid crystal display (LCD) using a backlight unit (BLU).

In general, the OLED display outputs a linear polarization image in the same way as the LCD display in order to prevent reflection of external light. If an active retarder panel operates in low bend/high bend in synchronization with a left-eye image and a right eye-image displayed on a display apparatus, the polarization states of the left-eye image and the right-eye image become different from each other.

As shown in FIG. 1B, in the case that incident light is vertical linear polarization, the linear polarization is changed to 90° and thus becomes horizontal linear polarization if the active retarder panel is in a low bend, and the light passes as the vertical linear polarization without being changed if the active retarder panel is in a high bend. Accordingly, the left-eye image and the right-eye image are distinguished from each other using passive glasses to which a vertical or horizontal linear polarization film is applied, so that the 3D image can be created.

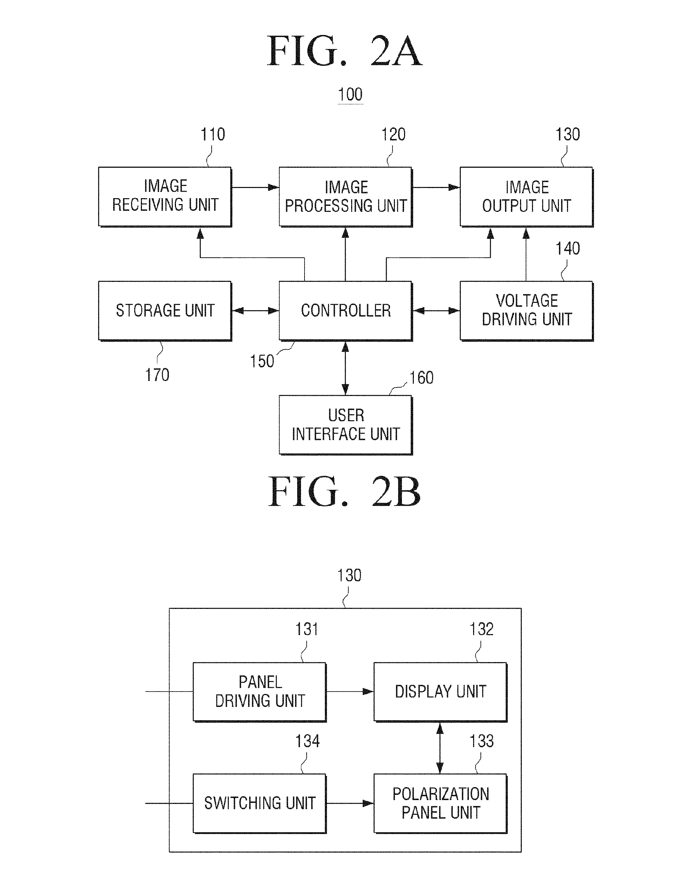

FIGS. 2A is a block diagram illustrating the display apparatus 100 of FIG. 1.

Referring to FIG. 2A, the display apparatus 100 includes an image receiving unit 110, an image processing unit 120, an image output unit 130, a voltage driving unit 140, a controller 150, a user interface unit 160, and a storage unit 170.

The image receiving unit 110 receives a broadcast from a broadcasting station or a satellite in a wired or wireless manner and demodulates the broadcast. The image receiving 110 may be connected to an external apparatus such as a camera to receive a 3D image from the external apparatus. The image receiving unit 110 may be connected to the external apparatus in a wireless manner or in a wired manner through an interface such as S-Video, component, composite, D-sub, DVI, and HDMI.

The 3D image includes at least one frame and refers to an image in which a left-eye image and a right-eye image are included in one image frame or a left-eye image or a right-eye image is included in each frame. That is, the 3D image is an image that is generated according to one of various 3D formats.

Accordingly, the 3D image received at the image receiving unit 110 may be of various formats. In particular, the 3D image may be of a format according to one of a top-bottom scheme, a side by side scheme, a horizontal interleave scheme, a vertical interleave scheme or a checker board scheme, and a sequential frame scheme.

The image receiving unit 110 transmits the 3D image to the image processing unit 120.

The image processing unit 120 performs signal-processing such as video decoding, format analyzing, and video scaling with respect to the 3D image received from the image receiving unit 110, and adds a graphic user interface (GUI) to the 3D image.

In particular, the image processing unit 120 generates a left-eye image and a right-eye image corresponding to a size of one screen (for example, 1920 x 1080) using the format of the 3D image input from the image receiving unit 110.

That is, if the 3D image has a format according to one of the top-bottom scheme, the side by side scheme, the horizontal interleave scheme, the vertical interleave scheme or the checker board scheme, and the sequential frame scheme, the image processing unit 120 extracts a left-eye image portion and a right-eye image portion from each image frame and up-scales or interpolates the extracted left-eye image and right eye-image, thereby generating a left-eye image and a right-eye image to be provided to the user.

Also, if the 3D image has a format according to a general frame sequence scheme, the image processing unit 120 extracts a left-eye image or a right-eye image from each frame and prepares the left-eye image and the right-eye image to be provided to the user.

Information on the format of the 3D image may be included in a 3D image signal or may not be included.

For example, if the information on the format of the 3D image is included in the 3D image signal, the image processing unit 120 analyzes the 3D image and extracts the information on the format, and processes the 3D image according to the extracted information. On the other hand, if the information on the format of the 3D image is not included in the 3D image signal, the image processing unit 120 processes the 3D image according to a format input by the user or processes the 3D image according to an already set format.

The image processing unit 120 time-divides the left-eye image and the right-eye image and alternately transmits the left-eye image and the right-eye image to the image output unit 130. That is, the image processing unit 120 transmits the left-eye image and the right-eye image to the image output unit 130 in a temporal order, such as 'left-eye image (L1)→right-eye image (R1) →left-eye image (L2) →right-eye image (R2) →...'

The image output unit 130 alternately outputs the left-eye image and the right-eye image output from the image processing unit 120 and provides the left-eye image and the right-eye image to the user.

In particular, the image output unit 130 includes a polarization panel (or a polarization sheet or a polarization film) which is switchable between polarization directions, and provides a different polarization direction to the left-eye image and the right-eye image by switching the polarization direction of the polarization panel.

Specifically, the image output unit 130 switches the polarization direction of the polarization panel such that the polarization panel has a first polarization direction for the left-eye image and has a second polarization direction for the right-eye image. The polarization panel may be realized by an active retarder. Specifically, the polarization panel may be vertically divided N times or may not be divided according to various exemplary embodiments.

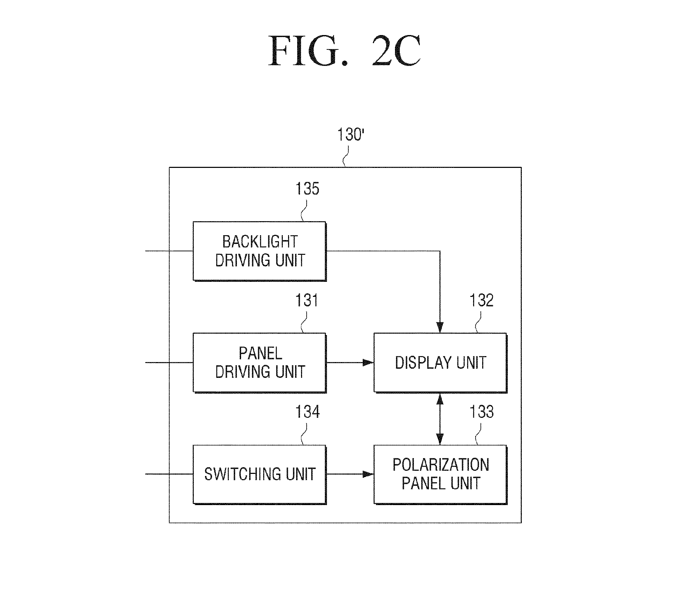

FIGS. 2B and 2C are block diagrams illustrating the image output unit 130 in detail according to various exemplary embodiments.

Referring to FIG. 2A, the image output unit 130 includes a panel driving unit 131, a display unit 132, a polarization panel unit 133, and a switching unit 134.

The display unit 132 displays the left-eye image and the right-eye image and may be realized by an OLED panel including an emissive element, for example.

Specifically, the display unit 132 includes a plurality of pixels and each of the pixels may include an emissive element to emit light in response to a flow of current, an ELVDD to supply current to the emissive element, and a driving transistor to control current supplied to the emissive element. The emissive element may be an OLED.

The pixels may include Red, Green, and Blue (RGB) pixels. The RGB pixels may emit light simultaneously or in sequence under control of the controller 150, which will be described below.

The panel driving unit 131 drives the display unit 132 under control of the controller 150. Accordingly, the panel driving unit 131 may include a data driving unit, a scan driving unit, and a timing controller, but a detailed description thereof is omitted here.

The polarization panel unit 133 may be provided to correspond to an entire area of the display unit 132.

Specifically, the polarization panel unit 133 may include a specific function cell which is able to control a direction in which an image is represented on a polarization panel surface.

The switching unit 134 may switch the polarization direction of the polarization film such that the polarization film has a first polarization direction for the left-eye image and has a second polarization direction for the right-eye image. That is, the switching unit 134 may control the polarization panel unit 133 to be driven in synchronization with a signal of the display unit 132.

For example, if the left-eye image is displayed on the display unit 132, the switching unit 134 may switch the polarization direction of the polarization panel unit 133 such that the polarization panel unit 133 has the first polarization direction corresponding to a left-eye polarization of polarized glasses, that is, 3D glasses.

Also, if the right-eye image is displayed on the display unit 132, the switching unit 13 may switch the polarization direction of the polarization panel unit 133 such that the polarization panel unit 133 has the second polarization direction corresponding to a right-eye polarization of the polarized glasses, that is, the 3D glasses.

For example, the polarization panel unit 133 and the switching unit 134 may be realized by an active retarder, which is phase shift (P/S) switchable.

Referring to FIGS. 2C, the image output unit 130' may include a panel driving unit 131, a display unit 132, a polarization panel unit 133, a switching unit 134, a backlight driving unit 135, and a backlight emitting unit (not shown).

The display unit 132 displays the left-eye image and the right-eye image and may be realized by an LCD panel which uses an LED as a backlight source.

The panel driving unit 131 drives the display unit 132 under control of the controller 150.

The polarization panel 133 may be provided to correspond to an entire area of the display unit 132 and may be realized by a polarization film that is able to adjust a polarization direction.

Specifically, the polarization panel unit 133 may include a specific function cell that is able to control a direction in which an image is represented on a polarization panel surface.

The switching unit 134 may switch the polarization direction of the polarization panel unit 133 such that the polarization panel unit 133 has a first polarization direction for the left-eye image and has a second polarization direction for the right-eye image. That is, the switching unit 134 may control such that the polarization panel unit 133 is driven in synchronization with a signal of the display panel 132.

For example, if the left-eye image is displayed on the display unit 132, the switching unit 134 may switch the polarization direction of the polarization panel unit 133 such that the polarization panel unit 133 has the first polarization direction corresponding to a left-eye polarization of the polarized glasses, that is, the 3D glasses. The left-eye polarization may be a left circular polarization or a left elliptical polarization.

If the right-eye image is displayed on the display unit 132, the switching unit 134 may switch the polarization direction of the polarization panel unit 133 such that the polarization panel unit 133 has the second polarization direction corresponding to a right-eye polarization of the polarized glasses, that is, the 3D glasses.

For example, the polarization panel unit 133 and the switching unit 134 may be realized by an active retarder which is P/S switchable.

Also, the image output unit 130 may include the backlight emitting unit (not shown) to emit light to the display unit 132 and the backlight driving unit 135 to drive the backlight emitting unit (not shown).

The backlight driving unit 135 has a plurality of scanning pulses forming one frame section, and generates a scanning signal which is adjusted under control of the controller 150 and drives the backlight emitting unit (not shown).

The backlight emitting unit (not shown) emits light to the display unit 132 and may use one of a white LED and a color LED as a light source. However, this should not be considered as limiting. One of a cold cathode fluorescent lamp (CCFL), a hot cathode fluorescent lamp (HCFL), a surface-conduction electron-emitter display (SED), and a field emission display (FED) may be used. Also, the backlight emitting unit(not shown) may be divided into a predetermined number of areas and may be scanned by the backlight driving unit 135. The predetermined number of areas may be classified on a line basis or a block basis. The block may be a predetermined number of lamps and the backlight driving unit 135 may drive the lamps such that the lamps flicker on the block basis.

In this case, the controller 150 may control the backlight driving unit 135 to drive the backlight emitting unit(not shown) at a predetermined time when the left-eye image and the right-eye image are displayed.

Although the display unit 132, the polarization panel unit 133, and the switching unit 134 may be provided separately in the present exemplary embodiment, this is merely an example. The polarization panel unit 133 and the switching unit 134 may be integrally formed with the display unit 143. For example, an LCD panel may include a display, a polarization panel, and a polarization switch.

The voltage driving unit 140 generates a driving voltage and provides the driving voltage to the image output unit 130.

Specifically, the voltage driving unit 140 may provide the voltage to the polarization panel unit 133.

The controller 150 controls an overall operation of the display apparatus 100 according to a user command received from the user interface unit 160.

In particular, the controller 150 controls the image receiving unit 110 and the image processing unit 120 to receive the 3D image and divide the 3D image into the left-eye image and the right-eye image, and controls to up-scale or interpolates the left-eye image and the right-eye image so that the left-eye image and the right-eye image can be displayed on one screen.

The controller 150 may control the image output unit 130 to switch the polarization direction of the image output from the image output unit 130 to coincide with the left-eye image or the right-eye image.

Also, the controller 150 may control the voltage driving unit 140 to divide the polarization panel unit 133 in time or in space and drive the polarization panel unit 133 with a voltage corresponding to each of the RGB pixels, respectively, forming at least one of the left-eye image and the right-eye image output through the display unit 132.

According to an exemplary embodiment, if the display unit 132 has the RGB pixels repeatedly arranged and the same pixels are arranged in a vertical direction, the controller 150 divides the polarization panel unit 133 vertically in space in the unit of the same pixels and drives the polarization panel unit 133 with a voltage corresponding to each of the RGB pixels, respectively.

According to another exemplary embodiment, if the image output unit 130 is configured as shown in FIG. 2B, the controller 150 may control the voltage driving unit 140 to drive the polarization panel unit 133 in sequence with the voltage corresponding to each of the RGB pixels, respectively, in an image frame section of at least one of the left-eye image and the right-eye image. In this case, the RGB pixels may include an emissive element and may emit light simultaneously or in sequence.

If the RGB pixels emit light in sequence, the controller 150 may control the voltage driving unit 140 to drive the polarization panel unit 133 in sequence with the voltage corresponding to each of the RGB pixels, respectively, in synchronization with a time when each of the RGB pixels emits light.

According to another exemplary embodiment, if the image output unit 130 is configured as shown in FIG. 2C, the controller 150 may control the voltage driving unit 140 to drive the polarization panel unit 133 in sequence with the voltage corresponding to each of the RGB pixels, respectively.

Specifically, if the backlight driving unit 135 uses a white light source, the display unit 132 displays an image in which R, G, and B pixels are mixed and the polarization panel unit 133 may be driven in sequence with a voltage that is optimized for R, G, and B wavelengths in one frame section of at least one of the left-eye image and the right-eye image.

Also, if the backlight driving unit 135 uses a color RGB light source, the polarization panel unit 133 may be driven in sequence with the voltage that is optimized for the R, G, and B wavelengths in one frame section of at least one of the left-eye image and the right-eye image in synchronization with a time when the color RGB light source is driven in sequence.

According to another exemplary embodiment, the controller 150 may control to supply a driving voltage corresponding to image information on at least one of the left-eye image and the right-eye image to the polarization panel unit 133. The image information may be at least one of brightness information and grayscale information of the input image.

The user interface unit 160 transmits a user command received from an inputting means such as a remote controller to the controller 150.

The storage unit 170 may be realized by a storage medium in which various programs necessary for operating the display apparatus 100 are stored, such as a memory and a hard disk drive (HDD).

According to an exemplary embodiment, 3D glasses (not shown) may be passive 3D glasses. The passive 3D glasses, which are used for the 3D image, have different polarization directions for the left-eye image and the right-eye image, respectively, and a detailed description thereof is omitted here.

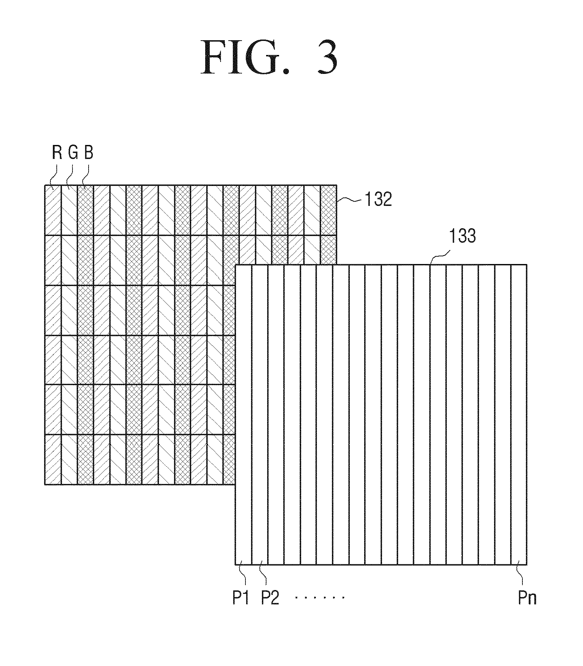

FIGS. 3 to 6 are views to explain a driving method of a display apparatus in detail according to various exemplary embodiments.

FIG. 3 is a view to explain a driving method of a display apparatus according to an exemplary embodiment.

As shown in FIG. 3, the display unit 132 time-divides a left-eye image and a right-eye image and displays the left-eye image and the right-eye image alternately, and may include a plurality of RGB pixels.

In this case, the polarization panel unit 133 may be divided vertically in space in the unit of same pixels and may be driven by a voltage corresponding to each of the RGB pixels.

Specifically, the polarization panel unit 133 is vertically divided into areas P1, P2, ..., Pn to correspond to each of R, G, and B pixels which are vertically aligned, and each area may be driven with a voltage corresponding to the pixels corresponding to each area.

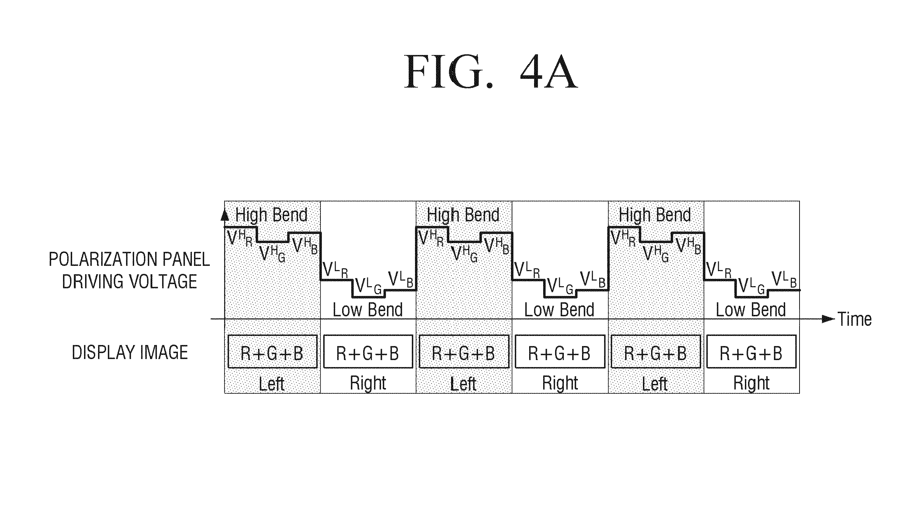

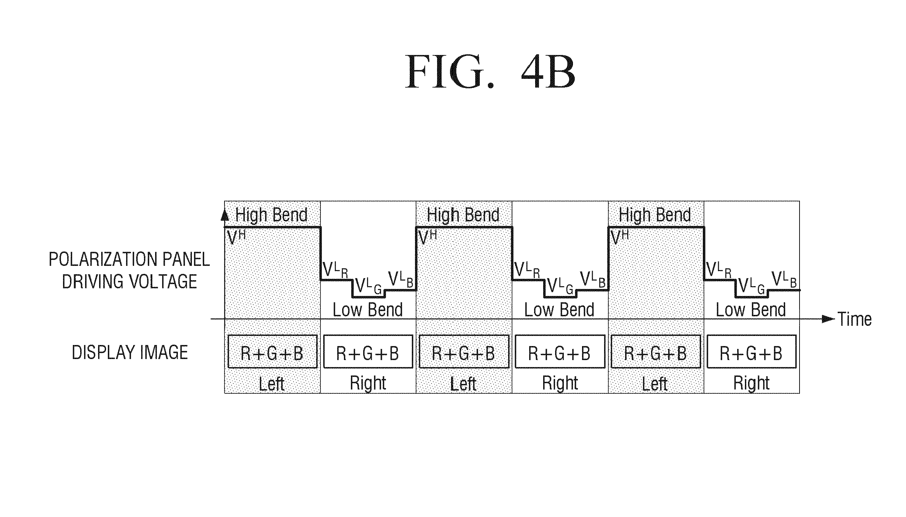

FIGS. 4A and 4B are views to explain a driving method of a display apparatus according to another exemplary embodiment.

As shown in FIG. 4A, the polarization panel unit 133 may be driven in sequence with voltages ($V^H_R$, $V^H_G$, $V^H_B$) corresponding to the RGB pixels, respectively in a frame section of each of the left-eye image and the right-eye image.

Specifically, when the display unit 132 displays an image in which the R, G, and B are mixed, the polarization panel unit 133 may be driven in sequence with the voltages that are optimized for the R, G, and B in each image frame section. However, in this case, the polarization panel unit 133 may need to be driven at a high frequency such as 360Hz or higher.

Also, the low/high voltage may be controlled so that a color deviation and a brightness difference between the left-eye image and the right-eye image can be minimized. Accordingly, a specific color is prevented from being distorted.

For example, this driving method is applied if the display apparatus 100 is realized by an LCD apparatus using a white LED light source as backlight or if the display apparatus 100 is an emissive display using an emissive element (in which RGB pixels emit light simultaneously).

Also, as shown in FIG. 4B, the polarization panel unit 133 may be driven with a predetermined voltage in a high bend in which a polarization direction is the same as a polarization direction of output light (for example, a vertical linear polarization), and may be driven in sequence with voltages ($V^H_R$, $V^H_G$, $V^H_B$) corresponding to each of the RGB pixels, respectively, in a low bend in which the polarization direction is perpendicular to the polarization direction of the output light.

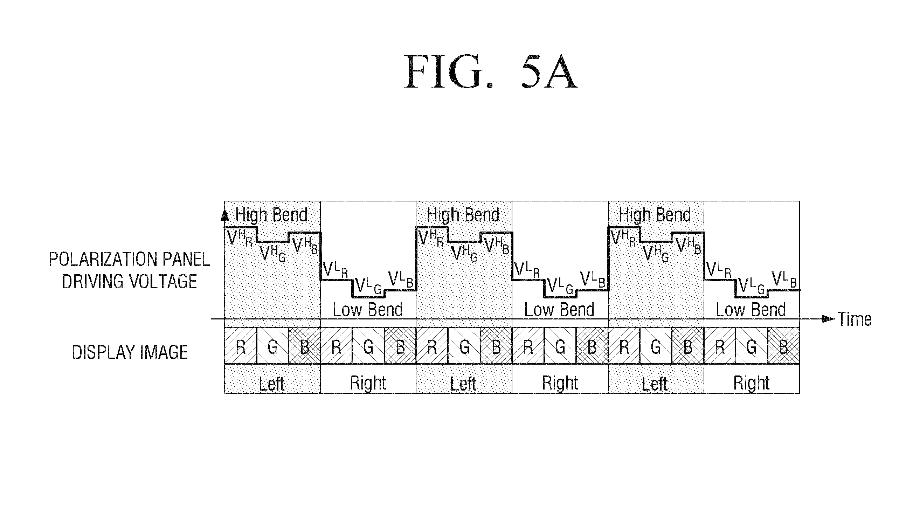

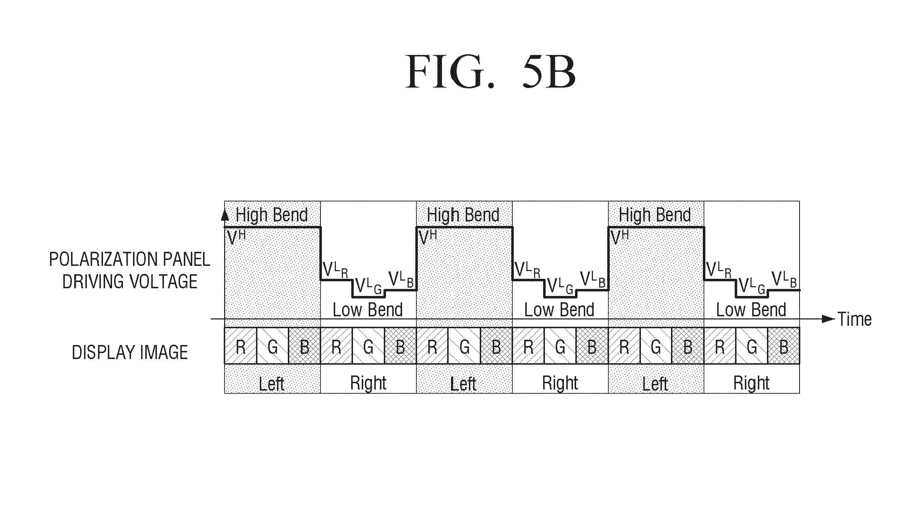

FIGS. 5A and 5B are views to explain a driving method of a display apparatus according to another exemplary embodiment.

As shown in FIG. 5A, the polarization panel unit 133 may be driven in sequence with voltages ($V^H_R$, $V^H_G$, $V^H_B$) corresponding to each of the RGB pixels, respectively, which are displayed in sequence on the display unit 132 in a frame section of each of the left-eye image and the right-eye image.

Specifically, if an image is displayed on the display unit 132 by displaying the RGB pixels in sequence, the polarization panel unit 133 may be driven in sequence with the voltages which are optimized for the RGB pixels displayed on the display unit 132 in sequence.

For example, this driving method is applied if the display apparatus 100 is realized by an LCD apparatus using a color LED light source as backlight and the color LED light source used as the backlight is driven in sequence. In this case, the polarization panel unit 133 may be driven in sequence with the voltages optimized for the color RGB light sources in synchronization with a time when the color RGB light source is driven. Also, this driving method may be applied if the display apparatus 100 is an emissive display using an emissive element or if the RGB pixels emit light in sequence.

Also, as shown in FIG. 5B, the polarization panel unit 133 may be driven with a predetermined voltage in a high bend in which a polarization direction is the same as a polarization direction of output light (for example, a vertical linear polarization), and may be driven in sequence with voltages ($V^H_R$, $V^H_G$, $V^H_B$) optimized for each of the RGB, respectively, in a low bend in which the polarization direction is perpendicular to the polarization direction of the output unit in synchronization with a time when the RGB light source is driven.

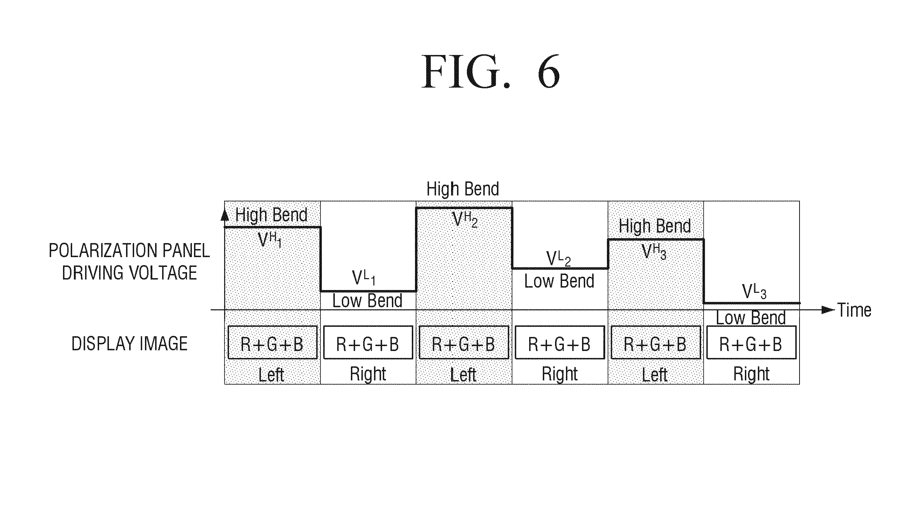

FIG. 6 is a view to explain a driving method of a display apparatus according to another exemplary embodiment.

As shown in FIG. 6, a color deviation may be improved by analyzing an input image displayed on the display unit 132.

Specifically, after an average color of an image is grasped using an average of each of RGB pixels of the input image, the polarization panel 133 may be driven by a voltage optimized for a corresponding color. Accordingly, the color deviation can be improved without changing a configuration of the polarization panel or improving a driving speed, and distortion in a dominant color of each image is prevented and the image becomes clearer.

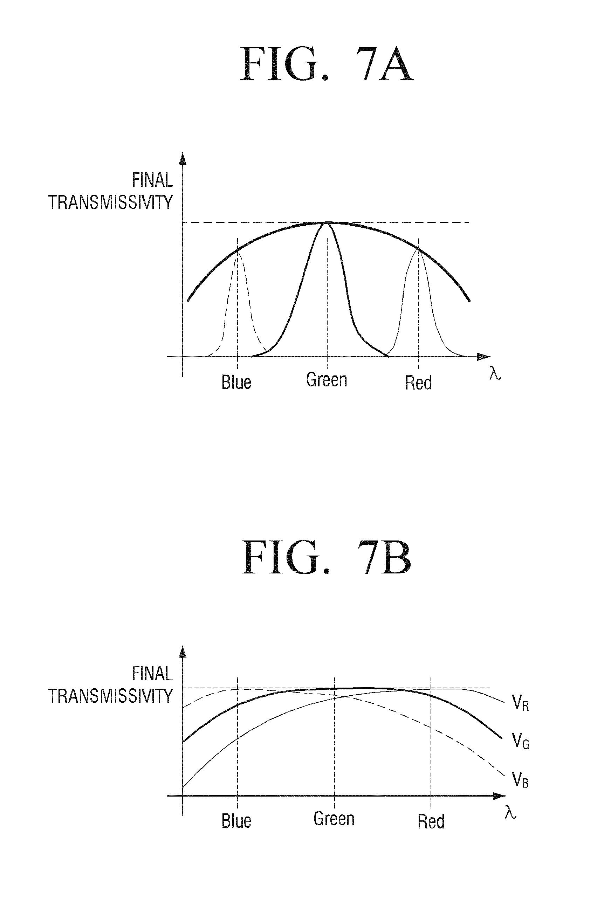

FIGS. 7A and 7B are views to explain an effect that is obtained if the present disclosure is applied.

A linear polarization active retarder panel changes a polarization direction to 0° or 90° by delaying a phase of incident light as much as 0 or $\lambda/2$. A phase delay difference ($\Omega$) due to the active retarder panel is determined by a wavelength ($\lambda$) of incident light, a characteristic ($\Delta n$) of liquid crystal used in the active retarder panel, and a thickness (d) of a cell as follows:

[Equation 1]

$$\Omega = 2\pi / \lambda^* \triangle n^* d$$

As shown in equation 1, light of a different wavelength (color) has a different phase delay difference in the same driving condition of the active retarder panel. For example, blue having a short wavelength is further delayed than green and red having a long wavelength is less delayed than green. Accordingly, the blue or red passing through the active retarder panel which is designed to rotate the linear polarization of the green to 90° causes an elliptical polarization component, and thus some light is blocked by a linear polarization filter of the passive glasses. This causes a difference in transmissivity according to a wavelength of light as shown in FIG. 7A.

As a result, in the case that the active retarder panel is optimized for a specific wavelength, if an image in which several colors are mixed such as white light is displayed on a display, a finally viewed image has a different color from that as planned to be displayed. Also, if a phase delay characteristic is different between low and high bends of the active retarder panel, color or brightness may be different between the left-eye image and the right-eye image.

However, according to the exemplary embodiment, a degree of phase delay of slow axis may be controlled by applying a specific voltage to the low/high bend of the active retarder panel as shown in FIG. 7. Accordingly, if the voltage optimized for each of the red, green, and blue wavelengths used in the display apparatus is applied to the active retarder panel, the transmissivity of the corresponding wavelength can be maximized. Also, by controlling the voltage applied to the active retarder panel according to a displayed color, a deviation between the displayed color and the finally viewed color can be improved. Also, a color deviation and a brightness difference between the left-eye image and the right-eye image can be prevented in displaying the 3D image.

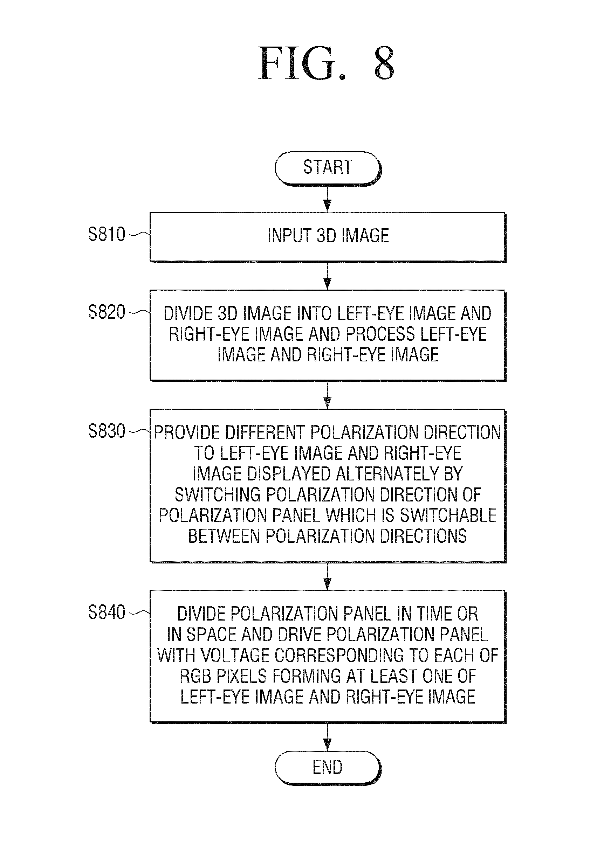

FIG. 8 is a flowchart to explain a driving method of a display apparatus according to an exemplary embodiment.

According to the driving method of the display apparatus shown in FIG. 8, if a 3D image is input (S810), the input 3D image is divided into a left-eye image and a right-eye image and the left-eye image and the right-eye image are processed (S820).

A different polarization direction is provided to the left-eye image and the right-eye image being displayed alternately by switching a polarization direction of a polarization panel which is switchable between the polarization directions (S830).

The polarization panel is divided in time or in space and is driven with a voltage corresponding to each of RGB pixels, respectively, forming at least one of the left-eye image and the right-eye image (S840).

The display apparatus may include a display unit which time-divides the left-eye image and the right-eye image and alternately displays the left-eye image and the right-eye image and includes a plurality of RGB pixels, a polarization panel unit which corresponds to an entire area of the display unit and includes a polarization panel which is able to adjust a polarization direction, and a switching unit which switches a polarization direction of the polarization panel unit such that a first polarization direction is provided if the left-eye image is displayed and a second polarization direction perpendicular to the first polarization direction is provided if the right-eye image is displayed. The polarization panel unit and the switching unit may be realized by an active retarder.

In the display unit, the RGB pixels are repeatedly arranged in vertical lines of the same color. In operation S840, the polarization panel unit may be divided vertically in space in the unit of the same pixels and may be driven with a voltage corresponding to each of the RGB pixels, respectively.

In operation S840, the polarization panel unit may be driven in sequence with a voltage corresponding to each of the RGB pixels, respectively in an image frame section of at least one of the left-eye image and the right-eye image.

The RGB pixels may each include an emissive element and may emit light simultaneously.

The RGB pixels may each include an emissive element and may emit light in sequence. In this case, in operation S840, the polarization panel unit may be driven in sequence with a voltage corresponding to each of the RGB pixels, respectively, at a time when each of the RGB pixels emits light.

Also, the display apparatus may further include a backlight unit which is disposed on a rear surface of the display unit and emit light to the display unit by driving a white light source. In operation S840, the polarization panel unit may be driven in sequence with a voltage corresponding to each of the RGB pixels, respectively.

The display apparatus may further include a backlight unit which is disposed on a rear surface of the display unit and emit light to the display unit by driving color RGB light sources in sequence. In operation S840, the polarization panel unit may be driven in sequence with a voltage corresponding to each of the RGB pixels, respectively at a time when each of the RGB light sources is driven.

According to a driving method of a display apparatus according to another exemplary embodiment, a 3D image is input and the 3D image is divided into a left-eye image and a right-eye image and the left-eye image and the right-eye image are processed.

A different polarization direction may be provided to the left-eye image and the right-eye image being displayed alternately by switching a polarization direction of a polarization panel which is switchable between the polarization directions.

A driving voltage corresponding to image information on at least one of the left-eye image and the right-eye image may be applied to the polarization panel. The information on the input image may be at least one of brightness information and grayscale information of the input image.

If the active retarder panel is divided in time or in space and is driven according to the exemplary embodiment as described above, a color deviation and a brightness difference between the left-eye image and the right-eye image can be prevented. Accordingly, the user can view a high quality image based on passive glasses without a color deviation between an image displayed on the display screen and a finally viewed image.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. A display apparatus comprising:

   an image input unit arranged to receive a 3D image;
   a image processing unit arranged to divide the 3D image into a left-eye image and a right-eye image and to process the left-eye image and the right-eye image;
   an image output unit which comprises a polarization panel which is switchable between polarization directions, and which is arranged to provide a different polarization direction to the left-eye image and the right-eye image displayed alternately by switching a polarization direction of the polarization panel;
   a voltage driving unit arranged to apply a driving voltage to the polarization panel; and
   a controller arranged to divide the polarization panel in time or in space and drives the polarization panel with a voltage corresponding to each of RGB pixels which form at least one of the left-eye image and the right-eye image.

2. The display apparatus as claimed in claim 1, wherein the image output unit comprises:

   a display unit arranged to divide the left-eye image and the right-eye image in time and arranged to display the left-eye image and the right-eye image alternately, and which comprises a plurality of RGB pixels;
a polarization panel unit which corresponds to an entire area of the display unit and comprises the polarization panel which is adjustable in a polarization direction; and
a switching unit arranged to switch a polarization direction of the polarization panel such that a first polarization direction is provided if the left-eye image is displayed and a second polarization direction perpendicular to the first polarization direction is provided if the right-eye image is displayed.

3. The display apparatus as claimed in claim 2, wherein the display unit is configured such that the RGB pixels are repeatedly arranged and same pixels are arranged in a vertical direction, wherein the controller is arranged to divide the polarization panel unit vertically in space in a unit of the same pixels and to control the voltage driving unit to drive the polarization panel unit with the voltage corresponding to each of the RGB pixels.

4. The display apparatus as claimed in claim 2 or 3, wherein the controller is arranged to control the voltage driving unit to drive the polarization panel unit in sequence with the voltage corresponding to each of the RGB pixels in an image frame section of at least one of the left-eye image and the right-eye image.

5. The display apparatus as claimed in claim 4, wherein the RGB pixels comprise an emissive element, wherein the controller is arranged to control the display unit such that the RGB pixels emit light simultaneously.

6. The display apparatus as claimed in claim 4, wherein the RGB pixels comprise an emissive element, wherein the controller is arranged to control the display unit such that the RGB pixels emit light in sequence, and is arranged to control the voltage driving unit to drive the polarization panel unit in sequence with the voltage corresponding to each of the RGB pixels at a time when each of the RGB pixels emits light.

7. The display apparatus as claimed in any one of claims 4 to 6, further comprising a backlight unit which is disposed on a rear surface of the display unit and is arranged to emit light to the display unit by driving a white light source, wherein the controller is arranged to control the voltage driving unit to drive the polarization panel unit in sequence with the voltage corresponding to each of the RGB pixels.

8. The display apparatus as claimed in any one of claims 4 to 6, further comprising a backlight unit which is disposed on a rear surface of the display unit and is arranged to emit light to the display unit by driving color RGB light sources in sequence, wherein the controller is arranged to control the voltage driving unit to drive the polarization panel unit in sequence with the voltage corresponding to each of the RGB pixels at a time when each of the RGB light source is driven.

9. The display apparatus as claimed in any one of claims 2 to 8, wherein the polarization panel unit and the switching unit are realized by an active retarder.

10. A driving method of a display apparatus, the driving method comprising:

receiving a 3D image;
dividing the 3D image into a left-eye image and a right-eye image and processing the left-eye image and the right-eye image;
providing a different polarization direction to the left-eye image and the right-eye image displayed alternately by switching a polarization direction of a polarization panel which is switchable between polarization directions; and
dividing the polarization panel in time or in space and driving the polarization panel with a voltage corresponding to each of RGB pixels which form at least one of the left-eye image and the right-eye image.

11. The driving method as claimed in claim 10, wherein the display apparatus comprises a display unit which divides the left-eye image and the right-eye image in time and displays the left-eye image and the right-eye image alternately, and which comprises a plurality of RGB pixels, a polarization panel unit which corresponds to an entire area of the display unit and comprises a polarization panel which is adjustable in a polarization direction, and a switching unit which switches a polarization direction of the polarization panel unit such that a first polarization direction is provided if the left-eye image is displayed and a second polarization direction perpendicular to the first polarization direction is provided if the right-eye image is displayed.

12. The driving method as claimed in claim 11, wherein the display unit is configured such that RGB pixels are repeatedly arranged and same pixels are arranged in a vertical direction,
wherein the dividing and driving comprises dividing the polarization panel unit vertically in space in a unit of the same pixels and driving the polarization panel unit with the voltage corresponding to each of the RGB pixels.

13. The driving method as claimed in claim 11, wherein the dividing and driving comprises driving the polarization panel unit in sequence with the voltage corresponding to each of the RGB pixels in an image frame section of at least one of the left-eye image and the right-eye image.

14. The driving method as claimed in claim 13, wherein the RGB pixels comprise an emissive element and emit light simultaneously.

15. The driving method as claimed in claim 13 or 14, wherein the RGB pixels comprise an emissive element and emit light in sequence,
wherein the dividing and driving comprises driving the polarization panel unit in sequence with the voltage corresponding to each of the RGB pixels at a time when each of the RGB pixels emits light.

# FIG. 1A

# FIG. 1B

# FIG. 2A

100

| 110 | 120 | 130 |
|-----|-----|-----|
| IMAGE RECEIVING UNIT | IMAGE PROCESSING UNIT | IMAGE OUTPUT UNIT |

140

| STORAGE UNIT | CONTROLLER | VOLTAGE DRIVING UNIT |
|--------------|------------|----------------------|

170        150

160

USER INTERFACE UNIT

# FIG. 2B

130

| 131 | 132 |
|-----|-----|
| PANEL DRIVING UNIT | DISPLAY UNIT |

| 134 | 133 |
|-----|-----|
| SWITCHING UNIT | POLARIZATION PANEL UNIT |

# FIG. 2C

130'

135

BACKLIGHT
DRIVING UNIT

131

PANEL
DRIVING UNIT

132

DISPLAY UNIT

134

SWITCHING UNIT

133

POLARIZATION
PANEL UNIT

# FIG. 3

# FIG. 4A

# FIG. 4B

EP 2 595 395 A1

# FIG. 5A

POLARIZATION PANEL DRIVING VOLTAGE

DISPLAY IMAGE

EP 2 595 395 A1

# FIG. 5B

EP 2 595 395 A1

# FIG. 6

# FIG. 7A

# FIG. 7B

# FIG. 8

START

S810 — INPUT 3D IMAGE

S820 — DIVIDE 3D IMAGE INTO LEFT-EYE IMAGE AND RIGHT-EYE IMAGE AND PROCESS LEFT-EYE IMAGE AND RIGHT-EYE IMAGE

S830 — PROVIDE DIFFERENT POLARIZATION DIRECTION TO LEFT-EYE IMAGE AND RIGHT-EYE IMAGE DISPLAYED ALTERNATELY BY SWITCHING POLARIZATION DIRECTION OF POLARIZATION PANEL WHICH IS SWITCHABLE BETWEEN POLARIZATION DIRECTIONS

S840 — DIVIDE POLARIZATION PANEL IN TIME OR IN SPACE AND DRIVE POLARIZATION PANEL WITH VOLTAGE CORRESPONDING TO EACH OF RGB PIXELS FORMING AT LEAST ONE OF LEFT-EYE IMAGE AND RIGHT-EYE IMAGE

END

**EUROPEAN SEARCH REPORT**

Europäisches
Patentamt
European
Patent Office
Office européen
des brevets

Application Number

EP 12 18 9217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/151152 A1 (MILLER MICHAEL E [US] ET AL) 14 July 2005 (2005-07-14) * paragraphs [0099], [0103] - [0108]; figures 1-6 * | 1-15 | INV. H04N13/04 |
| X | US 2010/177175 A1 (CHEN CHENG-YI [TW] ET AL) 15 July 2010 (2010-07-15) * paragraphs [0019] - [0024], [0032] - [0034]; figures 2-4 * | 1-15 | |
| X | US 2011/279659 A1 (JUNG SUNGMIN [KR]) 17 November 2011 (2011-11-17)  * paragraphs [0040] - [0043]; figures 1-2 * | 1,2,4,5, 7,9-11, 13,14 | |
| A | US 6 252 707 B1 (KLEINBERGER PAUL [IL] ET AL) 26 June 2001 (2001-06-26) * column 21, lines 46-59; figures 1-3,14 * | 6-9 | |

TECHNICAL FIELDS SEARCHED (IPC)

H04N

The present search report has been drawn up for all claims

| Place of search | Date of completion of the search | Examiner |
|---|---|---|
| Munich | 1 February 2013 | Schinnerl, Arnold |

EPO FORM 1503 03.82 (P04C01)

EP 2 595 395 A1

**ANNEX TO THE EUROPEAN SEARCH REPORT
ON EUROPEAN PATENT APPLICATION NO.** EP 12 18 9217

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2013

| Patent document cited in search report | | Publication date | Patent family member(s) | | Publication date |
|---|---|---|---|---|---|
| US 2005151152 | A1 | 14-07-2005 | US 2005151152 A1<br>US 2007171525 A1 | | 14-07-2005<br>26-07-2007 |
| US 2010177175 | A1 | 15-07-2010 | TW 201027125 A<br>US 2010177175 A1 | | 16-07-2010<br>15-07-2010 |
| US 2011279659 | A1 | 17-11-2011 | CN 102244797 A<br>GB 2480363 A<br>KR 20110125733 A<br>US 2011279659 A1 | | 16-11-2011<br>16-11-2011<br>22-11-2011<br>17-11-2011 |
| US 6252707 | B1 | 26-06-2001 | US 6252707 B1<br>US 2001013971 A1<br>US 2002030888 A1<br>US 2006203339 A1 | | 26-06-2001<br>16-08-2001<br>14-03-2002<br>14-09-2006 |

For more details about this annex : see Official Journal of the European Patent Office, No. 12/82

24